# EUROPEAN PATENT APPLICATION

(11) **EP 1 501 228 A1**
(43) Date of publication of application: **26.01.2005**
(21) Application number: 03747219.8
(22) Date of filing: 15.04.2003
(51) Int. Cl.: H04L 1/00, H04N 7/64

(54) **ENCODED PACKET TRANSMISSION/RECEPTION METHOD, DEVICE THEREOF, AND PROGRAM**

(30) Priority: 26.04.2002 JP 2002126599
(71) Applicant: NEC Corporation, Minato-ku, Tokyo 108-8001 (JP)
(72) Inventor: Koyama, Kazuhiro, Tokyo 108-8001 (JP); Ozawa, Kazunori, Tokyo 108-8001 (JP); Hatabu, Atsushi, Tokyo 108-8001 (JP)
(74) Representative: Glawe. Delfs. Moll
(86) International application number: PCT/JP2003/004738
(87) International publication number: WO 2003/092208

(57) **Abstract**

An encoded packet transmitting apparatus includes a converting unit (103), which receives a packet encoded at a preset compression ratio, re-encoding the packet data obtained on decoding data of said input packet, at a compression ratio different from said preset compression ratio, to generate a packet, and outputting the so generated packet, a delay adding unit (105) for performing control so as to add preset delay to the packet output from the converting unit (103) for transmitting the resultant packet, a multiplexing unit (106) for multiplexing the packet encoded at a preset compression ratio and the packet encoded at a compression ratio different from the preset compression ratio and added by delay and for outputting the resultant multiplexed transmission packet.

## Description

### TECHNICAL FIELD

This invention relates to a technique for transmitting encoded data and, more particularly, to a method and an apparatus for transmitting and receiving coded packets, and to a program therefor.

### BACKGROUND ART

Recently, as a method for efficiently transmitting moving picture data with a small transmission bandwidth, use of a moving picture compressed encoding system, such as MPEG (Moving Picture Expert Group)-4, has become widespread. In such a compressed encoding system, an input picture frame is processed with an inter-frame prediction by motion compensation, in terms of a rectangular area of a fixed size, termed a macro block, as a unit and the resultant motion vector and prediction residue picture data are then processed with two-dimensional discrete cosine transform (DCT) and quantization to give compressed signal data, which is then coded by variable length coding.

Meanwhile, if, in a variable length coded bit string (bitstream), even one bit of the bitstream is in error, the next following bitstream cannot be decoded correctly. Thus, in the MPEG-4, a unique word (codestring that does not present itself in the encoded data), also termed a resynchronization marker code (Resync Marker), is inserted in encoded data at a suitable interval as an error resilience technique, so that, even on error occurrence, the codeword is correctly recognized by the next resynchronization marker, such as to allow correct decoding as from this code. The resynchronization marker code (Resync Marker) is introduced at a break of the encoded data of the macroblock, and the introducing position thereof is aligned with the byte boundary, such as to form a video packet structure made up by the resynchronization marker code and an optional number of the next following macroblocks of the encoded information data. That is, by this video packet structure, decoding can be re-started, even in case of occurrence of a bit error, as from the next resynchronization marker code. In other words, it is possible to spatially localize the effect of an error.

Alternatively, when a bitstream is transmitted on the packet basis, it is usually transmitted on the video packet basis, so that, even in case of occurrence of a packet loss, decoding can similarly be re-started as from the next resynchronization marker code.

However, there is a problem that, if bit error or packet loss is produced in a burst-like fashion, such that plural video packets cannot be decoded correctly, decoded pictures are deteriorated more severely.

There is also raised a problem that, since inter-frame prediction is used for encoding, picture deterioration, once produced, is propagated to the next following frames.

In the present invention, the input encoded packet data is re-encoded. Reference is made to the description of, for example, the Japanese Patent Kokai Publication No. JP-A-8-111870, as the publication which has disclosed the technique pertinent to the re-encoding. In this Publication, there is disclosed, as a re-encoding method in the cascaded connection re-encoding consisting in re-encoding the picture information obtained on decoding the picture information obtained in turn on encoding followed by information volume compression in the preceding stage, such a configuration consisting in detecting encoded parameters in the encoding of the picture information of the preceding stage, deciding on a parameter conforming to the so detected encoded parameter and re-encoding the decoded picture information by the so determined encoded parameter.

Accordingly, it is a principal object of the present invention to provide an apparatus, a system, a method, and a program, in which error resilience may be improved and in which marked deterioration in picture quality of decoded pictures may be prohibited despite the bit errors or packet losses occurring on the transmission line for the compressed-encoded moving picture data.

It is another object of the present invention to provide an apparatus, a system, a method, and a program, in which the bandwidth taken up in transmitting encoded moving picture packets may be prevented from increasing.

### DISCLOSURE OF THE INVENTION

In one aspect of the present invention, providing means for accomplishing at least one of the objects of the present invention, there is provided an encoded data transmission apparatus, comprising means for receiving compressed-encoded data and for outputting data converted therefrom, in which said means outputs data obtained on decoding the compression-encoded data, re-encoding the resultant data and on selecting part or all of the re-encoded data, or outputs data selected from the compression-encoded data, as duplicated data, and means for controlling the delay so that the compression-encoded data and the duplicated data will be transmitted with temporal spacing from each other a preset time interval, multiplexing the compression-encoded data and the duplicated data and for outputting the resultant multiplexed data.

In another aspect of the present invention, providing means for accomplishing at least one of the objects of the present invention, there is provided an encoded data receiving apparatus comprising means for receiving multiplexed data sent from the above-defined encoded data transmission apparatus and for demultiplexing the compression-encoded data and the duplicated data from the multiplexed data, and means for reconstructing encoded data, using the duplicated data received, in substitution for the compression-encoded data, and for outputting the so reconstructed encoded data.

In a further aspect of the present invention, providing means for accomplishing at least one of the objects of the present invention, there is provided an encoded packet transmitting apparatus comprising a converter for being supplied with a packet compression-encoded at a preset compression ratio, decoding data of the packet suppliedonce, forming a packet compression-encoded from the data of the decoded packet at a compression ratio different from the preset compression ratio, and for outputting the so formed packet, a delay controller for controlling the delay added to the packet compression-encoded at the preset compression ratio (termed a 'a first class packet') and/or to the packet formed on re-encoding by the converter (termed 'a second class packet') so that the first class packet and the second class packet are transmitted with temporal spacing, corresponding to a preset time interval, in-between, and a multiplexing unit for outputting a multiplexed transmission packet, obtained on multiplexing the first class packet and the second class packet.

The above-defined encoded packet transmitting apparatus according to the present invention may further comprise a transmission decision unit arranged in substitution for the converter or downstream of the converter for deciding on a packet for transmission at an interval of a period of input packets or based on a preset parameter of packet data.

The above-defined encoded packet transmitting apparatus according to the present invention may further comprise a transmission decision unit arranged in substitution for the converter or downstream of the converter, the transmission decision unit performing decoding processing for a case where there is an error in the packet and for a case where there is no error in the packet, comparing the quality of the decoded results and deciding on a packet for transmission based on the results of comparison.

In a further aspect of the present invention, providing means for accomplishing at least one of the objects of the present invention, there is provided an encoded packet receiving apparatus comprising a decoding/demultiplexing unit for receiving multiplexed transmission packets including first class packets transmitted multiplexed at a time interval from one another and second class packets formulated based on the first class packets, decoding the number of times the multiplexed transmission packets have been received and for demultiplexing the multiplexed transmission packets into the first class packets and the second class packets, based on the number of times of receipt, a detection unit for detecting whether or not there is packet loss or transmission error in the first or second class packets obtained on demultiplexing, and a generating unit for outputting a predetermined class packet, out of the first class packet and the second class packet, which has been received as normally, as reconstructed data. In case the predetermined class packet has not been received as normally and the other class packet has been received as normally, the generating unit outputs, the normally received packet as reconstructed data.

The apparatus for receiving coded packets according to the present invention may further comprise, in place of the demultiplexing unit, a decoder/ separator for receiving multiplexed transmission packets including first class packets transmitted multiplexed at a time interval in-between and second class packets formulated based on the first class packets, decoding the number of times the multiplexed transmission packets have been received and for demultiplexing the multiplexed transmission packets into the first class packets and the second class packets, based on the number of times of receipt.

In the encoded data transmitting/ receiving apparatus, according to the present invention, the packet is a moving picture packet obtained on compressed-encoding moving picture data and packetizing the moving picture packet.

In a further aspect of the present invention, providing means for accomplishing at least one of the objects of the present invention, there is provided a coded data transmitting method comprising:
(a) a step of outputting all or a selected portion of data obtained on decoding compression-encoded data and re-encoding the decoded data, with the aid of means for being supplied with the compression-encoded data, converting the data supplied and for outputting the converted data, or data selected from the compression-encoded data, as duplicated data; and
(b) a step of controlling the delay of the compression-encoded data and the duplicated data so that the compression-encoded data and the duplicated data are transmitted with a preset time space in-between, multiplexing the compression-encoded data and the duplicated data and outputting the multiplexed data.

In another aspect of the present invention, providing means for accomplishing at least one of the objects of the present invention, there is provided an encoded data receiving method comprising:
(a) a step of receiving multiplexed data sent out in accordance with the above-described encoded data transmitting method and of separating the multiplexed data into the compression-encoded data and the duplicated data; and
(b) a step of reconstructing encoded data, with the aid of the received duplicated data, in place of the compression-encoded data, and outputting the so reconstructed encoded data.

In another aspect of the present invention, providing means for accomplishing at least one of the objects of the present invention, there is provided a program for a computer, forming an apparatus for transmitting encoded data, to execute the processing of being supplied with compression-encoded data and outputting data converted therefrom,
(a) the processing being the processing of outputting data obtained on decoding the compression-encoded data, re-encoding the resultant data and on selecting part or all of the re-encoded data, or outputting data selected from the compression-encoded data, as duplicated data; and
(b) the processing of controlling the delay so that the data obtained on compression coding and the duplicated data will be transmitted with the separation of a preset time interval in-between, multiplexing and outputting the data.

In another aspect of the present invention, providing means for accomplishing at least one of the objects of the present invention, there is provided a program for a computer, forming an apparatus for receiving multiplexed data sent out from an apparatus transmitting the encoded data, to execute
(a) the processing of demultiplexing the input multiplexed data into the compression-encoded data and the duplicated data; and
(b) the processing of reconstructing encoded data, with the aid of the duplicated data received, in substitution for the compression-encoded data, and outputting the so reconstructed encoded data.

### BRIEF DESCRIPTION OF THE DRAWINGS

Fig.1 shows the configuration of an encoded packet transmitting apparatus according to an embodiment of the present invention.
Fig.2 shows the configuration of an encoded packet receiving apparatus according to an embodiment of the present invention.
Fig.3 is a flowchart showing the processing sequence by an encoded packet transmitting apparatus according to an embodiment of the present invention.
Fig.4 shows the configuration of the encoded packet transmitting apparatus according to a second embodiment of the present invention.
Fig.5 shows the configuration of an encoded packet receiving apparatus according to a second embodiment of the present invention.
Fig.6 is a flowchart showing the processing sequence by an encoded packet receiving apparatus according to a second embodiment of the present invention.
Fig.7 shows the configuration of an encoded packet transmitting apparatus according to a third embodiment of the present invention.
Fig.8 shows the configuration of an encoded packet transmitting apparatus according to a fourth embodiment of the present invention.
Fig.9 shows the configuration of an encoded packet transmitting apparatus according to a fourth embodiment of the present invention.
Fig.10 is a schematic view for illustrating an example of multiplexing processing by a coded transmission packet multiplexing unit of the encoded packet transmitting apparatus according to a first embodiment of the present invention.
Fig.11 is a schematic view for illustrating an example of multiplexing processing by a coded transmission packet demultiplexing unit of the encoded packet transmitting apparatus according to the first embodiment of the present invention.
Fig.12 is a schematic view for illustrating an example of multiplexing processing by a coded transmission packet multiplexing unit of the encoded packet transmitting apparatus according to a modification of the first embodiment of the present invention.
Fig.13 is a schematic view for illustrating an example of multiplexing processing by a coded transmission packet multiplexing unit of the encoded packet transmitting apparatus according to a second embodiment of the present invention.
Fig.14 is a schematic view for illustrating an example of multiplexing processing by a coded transmission packet demultiplexing unit of the coded packet receiving apparatus according to a second embodiment of the present invention.

### BEST MODE FOR CARRYING OUT THE INVENTION

The schematics of the present invention are explained first, and preferred embodiments of the invention are then explained.

The present invention provides the function for preventing significant picture quality deterioration of decoded picture even in case of occurrence of bit errors and packet losses on a transmission line of data, resulting from compressed encoding of moving pictures. That is, according to the present invention, in duplicating and transmitting packets including encoded moving pictures, the packets are transmitted at a preset period or at adaptively changed time intervals, in order to take account of burst characteristicsistics of the bit errors and packet losses on the transmission line.

Moreover, according to the present invention, a packet to be duplicated may be determined by having reference to a parameter in the packet including an encoded moving picture to be transmitted which will have marked effects on the picture quality of the decoded picture.

Alternatively, according to the present invention, the packets including encoded moving pictures to be transmitted are decoded and the results of comparison of the picture quality when the packets contain errors and that when the packets are free from errors are compared to each other to decide on the packets to be duplicated.

The present invention provides the function of suppressing the band occupied in transmitting the packets including encoded moving pictures from increasing. In duplicating and transmitting the packets including encoded moving pictures, the packets are once decoded and subsequently re-encoded to give a high compression ratio.

According to the present invention, the packets for duplication may be verified at a preset period or as the parameters which will have marked effects on the picture quality of the decoded pictures, contained in the packets including encoded moving pictures, are taken into account.

According to the present invention, the packets including encoded moving pictures to be transmitted may also be decoded and the results of comparison of the picture quality when the packets contain errors and that when the packets are free from errors may be compared to each other to decide on the packets to be duplicated.

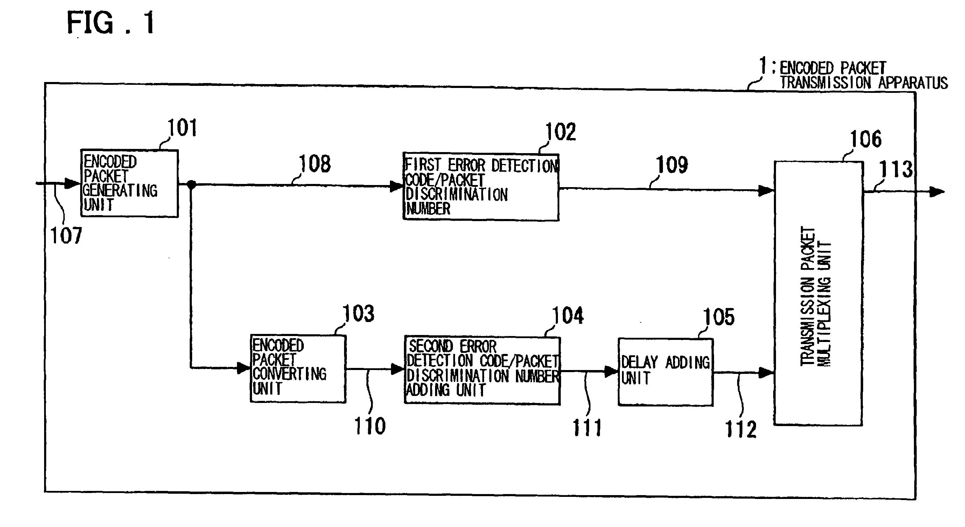

A transmitting apparatus according to a preferred embodiment of the present invention includes a converter (such as 103 of Fig.1), a delay controller (such as 105 of Fig.1), and a multiplexing unit (such as 106 of Fig.1). The converter is supplied with a packet compression-encoded at a preset compression ratio, decodes once data of the input packet, and assembles a packet by performing compressed encoding of the data of the decoded packet at a compression ratio different from the preset compression ratio, to output the so assembled packet.

The delay controller controls the delay added to the aforementioned packet, compression-encoded at the aforementioned preset compression ratio (termed the first class packet) and/or to the aforementioned packet formed on re-encoding by the above-mentioned converter (termed the second class packet) so that the first class packet and the second class packet will be transmitted at a spacing corresponding to the preset time interval. The multiplexing unit multiplexes the first class packet and the second class packet to output the resulting multiplexed transmission packet.

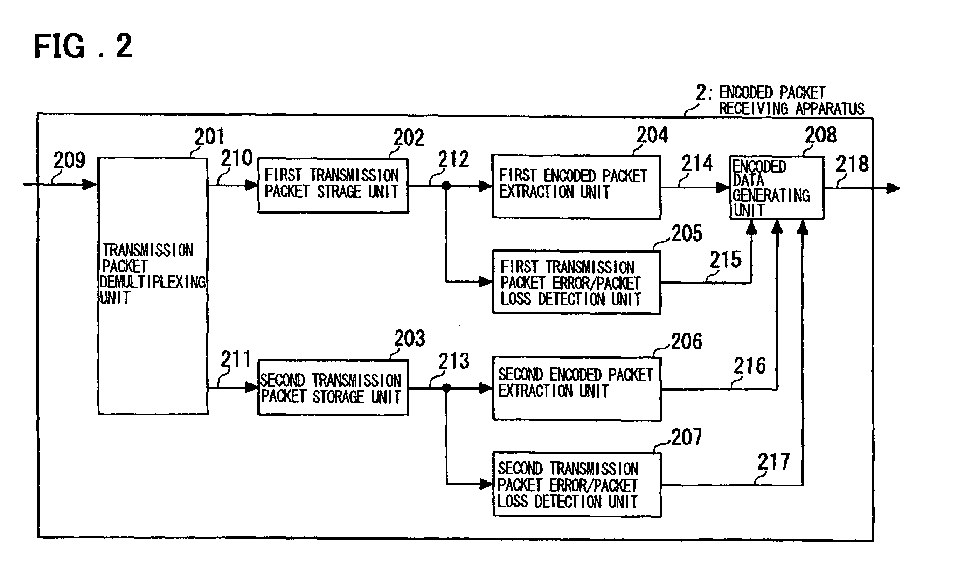

A receiving apparatus according to a preferred embodiment of the present invention includes a demultiplexer (such as 201 of Fig.2), a detection unit (such as 205, 207 of Fig.2), and a generating unit (such as 208 of Fig.2). The demultiplexing unit receives a multiplexed transmission packet, inclusive of first class packets, multiplexed at a preset interval from one another and transmitted in this state, and second class packets, formulated on the basis of the first class packets, and demultiplexes the multiplexed transmission packet into the first class packets and the second class packets, The detection unit checks for possible packet losses or transmission errors in the first class packets and the second class packets. The generating unit is designed so that, if the first class packet or the second class packet, whichever is the predetermined class packet, is received as normally, such class packet is output as reconstruction data, and so that, if the predetermined class packet is not received as normally and another class packet associated with the predetermined class packet is received as normally, such normally received packet is output as reconstruction data.

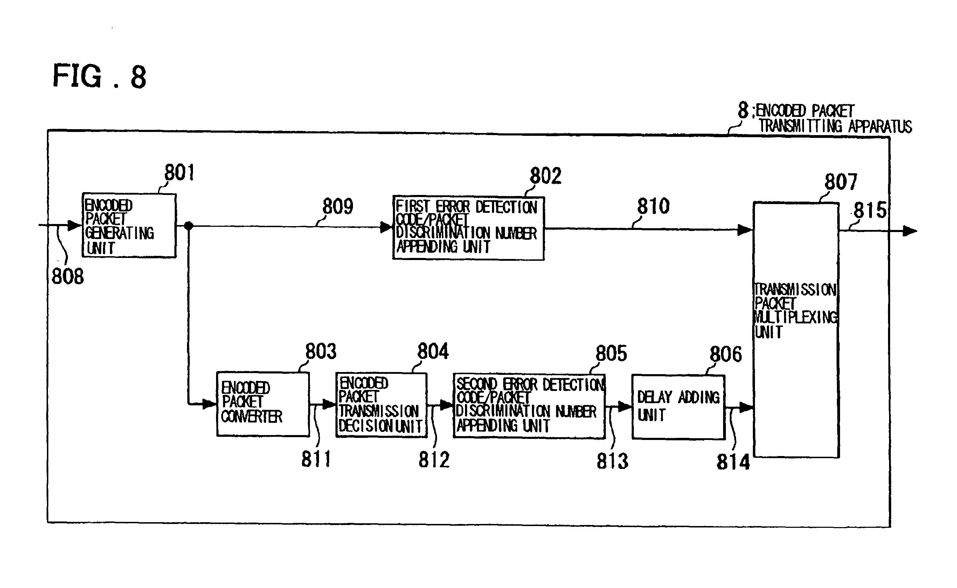

The transmitting apparatus according to a preferred embodiment of the present invention may include a transmission decision unit (such as 403 of or 804 of Fig.8) in place of the converter (103 of Fig.1) or downstream of the converter (803 of Fig.8). The transmission decision unit determines packets to be transmitted at a preset period with respect to input packets or based on a preset parameter of packet data.

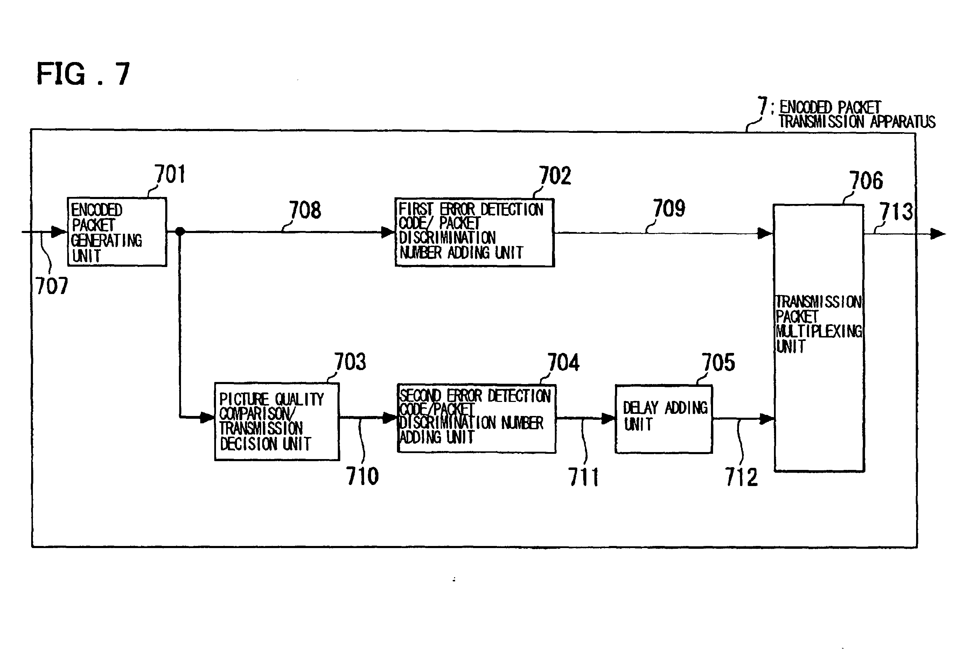

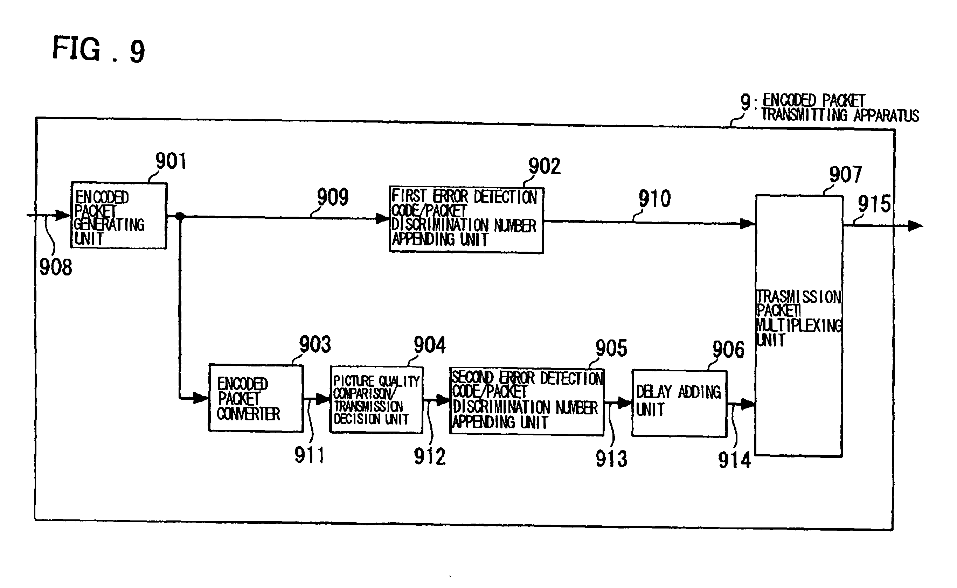

The transmitting apparatus according to a preferred embodiment of the present invention may include a transmission decision unit (such as 703 of Fig.7 or 904 of Fig.9) in place of the converter (103 of Fig.1) or downstream of the converter (903 of Fig.9). The transmission decision unit carries out decoding processing for a case where the packet contains an error and for a case where the packet is free with an error to compare the quality of the decoded results to decide on the packet for transmission (703 of Fig.7 or 904 of Fig.9).

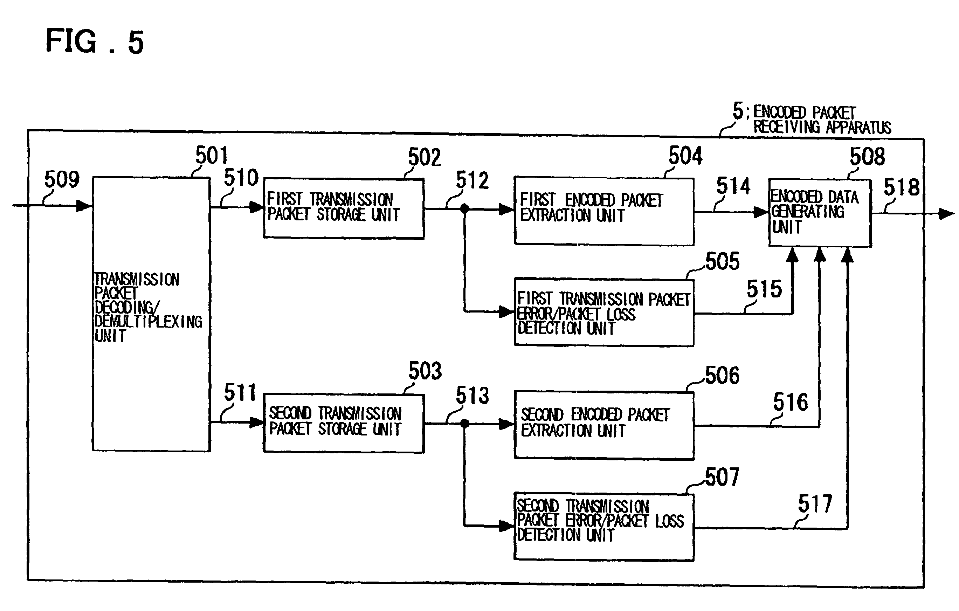

A receiving apparatus according to a preferred embodiment of the present invention may include a decoder/ demultiplexer (such as 501 of Fig.5), which is supplied with a multiplexed transmission packet, made up of the first packet and the second packet, having the aforementioned delay introduced therein and multiplexed to the first packet, decodes the number of times the same packet has been received, and which demultiplexes the multiplexed transmission packet into the first and second packets, by referring to the number of times of receipt of the same packet. The processing by the transmission apparatus and that by the receiving apparatus may be carried out by a program run by a computer making up the transmission apparatus and by a computer making up the transmission apparatus, respectively, for implementing the respective functions.

A method according to a preferred embodiment of the present invention comprises the following steps:
Step 1: A packet encoded at a preset compression ratio is input and data of the input packet is once decoded. The so decoded packet data is re-encoded at a compression ratio different from the aforementioned preset compression ratio to form a re-coded packet, which then is output.
Step 2: Delay added to a packet compression-encoded at the aforementioned compression ratio (termed 'first class packet') and to a re-coded packet (termed 'second class packet') is controlled so that the first class packet and the second class packet are spaced apart from each other a preset time interval and transmitted in this spaced-apart condition.
Step 3: A multiplexed transmission packet, obtained on multiplexing the first class packet and the second class packet, is output. The processing and control of these steps 1 to 3 may, of course, be carried out by a program which is run on a computer.

A method according to the present invention is a method for receiving signals transmitted by the above method, and comprises the following steps:
Step 1: The multiplexed transmission packet, including the first class packets, and the second class packets, formulated on the basis of the first class packets, with the first and second packets being transmitted multiplexed at a preset time interval from each other, is received, and is demultiplexed into the first class packet and the second class packet.
Step 2: The first class packets and the second class packets, thus demultiplexed, are checked for possible packet losses or transmission errors.
Step 3: if the first class packet or the second class packet, whichever is the predetermined class packet, is received, such class packet is output as reconstruction data and, if the predetermined class packet is not received as normally and another class packet different from the predetermined class packet is received as normally, such normally received packet is output as reconstruction data. The processing and control of these steps 1 to 3 may, of course, be carried out by a program which is run on a computer.

For more detailed explanation of the preferred embodiments of the present invention, certain examples of execution of the present invention are explained with reference to the drawings. Fig.1 shows the configuration of an encoded packet transmitting apparatus according to an embodiment of the present invention, and Fig.2 shows the configuration of an encoded packet receiving apparatus according to an embodiment of the present invention.

Referring to Fig.1, an encoded packet transmission apparatus 1 of the present embodiment includes a encoded packet generating unit 101, a first error detection code/ packet discrimination number adding unit 102, an encoded packet converting unit 103, a second error detection code/packet discrimination number adding unit 104, a delay adding unit 105 and a transmission packet multiplexing unit 106. The functions of these units may roughly be defined as follows:

The encoded packet generating unit 101 is supplied with compression-encoded moving picture data 107, to output an encoded packet 108, which is obtained on division to a preset packet unit size.

The first error detection code/ packet discrimination number adding unit 102 is supplied with the encoded packet 108, output from the encoded packet generating unit 101, to add an error detection code and a packet discrimination number for detecting bit errors and packet losses on the transmission line of the encoded packets 108, to output a transmission packet 109.

The encoded packet converting unit 103 is supplied with the encoded packet 108, output from the encoded packet generating unit 101, and re-encodes the encoded packet 108 at a compression ratio higher than the compression ratio for the encoded packets 108, to output high compression encoded packet 110.

The second error detection code/ packet discrimination number adding unit 104 is supplied with high compression encoded packet 110, output from the encoded packet converting unit 103, to add an error detection code and a packet discrimination number for detecting bit errors and packet losses on the transmission line of the high compression encoded packet 110, to output a high compression transmission packet 111.

The delay adding unit 105 is supplied with the high compression packet 111, output from the second error detection code/ packet discrimination number adding unit 104, and adds delay to the high compression transmission packet 111, to output a delayed high compression transmission packet 112.

The transmission packet multiplexing unit 106 multiplexes the transmission packet 109, output from the first error detection code/ packet discrimination number adding unit 102, with the delayed high compression transmission packet 112, output from the delay adding unit 105, to transmit a multiplexed transmission packet 113 on a transmission line.

Referring to Fig.2, the encoded packet receiving apparatus 2 of the present embodiment includes a transmission packet demultiplexing unit 201, a first transmission packet storage unit 202, a second transmission packet storage unit 203, a first encoded packet extraction unit 204, a first transmission packet error/ packet loss detection unit 205, a second encoded packet extraction unit 206, a second transmission packet error/packet loss detection unit 207 and a encoded data generating unit 208.

The functions of these units may roughly be defined as follows:

The transmission packet demultiplexing unit 201 receives a multiplexed transmission packet 209 from the transmission line and demultiplexes the multiplexed packet into a transmission packet 210 and a delayed high compression transmission packet 211.

The first transmission packet storage unit 202 is supplied with the transmission packet 210 from the transmission packet demultiplexing unit 201 to store the input transmission packet 210 in a first transmission packet receiving buffer, not shown.

The second transmission packet storage unit 203 is supplied with the delayed high compression transmission packet 211, output from the transmission packet demultiplexing unit 201, to store the input delayed high compression transmission packet 211 in a second transmission packet receiving buffer, not shown.

The first encoded packet extraction unit 204 extracts a first encoded packet 214, which is a compression-encoded moving picture data part, from the first transmission packet 212, stored in the first transmission packet storage unit 202.

The first transmission packet error/ packet loss detection unit 205 detects packet loss and bit error in the first transmission packet 212, stored in the first transmission packet storage unit 202, to output a first transmission packet detection result 215.

The second encoded packet extraction unit 206 extracts a second encoded packet 216, which is the compression-encoded moving picture data part, from a second transmission packet 213 stored in the second transmission packet storage unit 203.

The second transmission packet error/ packet loss detection unit 207 detects packet loss and bit error in the second transmission packet 213, stored in the second transmission packet storage unit 203, to output a second transmission packet detection result 217.

The encoded data generating unit 208 is supplied with the first encoded packet 214, first transmission packet detection result 215, a second encoded packet 216 and the second transmission packet detection result 217 to output reconstructed encoded data 218.

Referring to Figs.1 and 2, the operation of the encoded packet transmission apparatus of the present embodiment will be explained in detail.

Referring to Fig.1, the encoded packet generating unit 101 is supplied with moving picture data 107, which is compression-encoded in accordance with such systems as H.261 or H.263, recommended by ITU-T, or as MPEG-4 Visual, recommended by ISO/IEC, to divide the data into packets prescribed by RFC 2032, as IFTE recommendations (RTP Payload for H.263 bitstreams), RFC2190 (RTP payload for H.263 bitstreams) or RFC3016, to output encoded packets resulting from division. If, in the present embodiment, the compression-encoded moving picture data 107 has already been split from one packet to another, there is no necessity for splitting the data into packets in the encoded packet generating unit 101.

The first error detection code/ packet discrimination number adding unit 102 adds error correction codes and packet discrimination numbers to the encoded packet 108 to output the resulting transmission packet 109, in order to detect bit errors and packet losses on the transmission line of the input encoded packet 108 by the encoded packet receiving apparatus 2. If, in the present embodiment, a bit error detection mechanism is provided e.g. between the packet transmission apparatus 1 and the packet receiving apparatus 2, there is no necessity of adding the error correction code in the first error detection code/ packet discrimination number adding unit 102. Moreover, if the information for packet discrimination is included in the encoded packets 108, there is no necessity for adding the packet discrimination number by the first error detection code/ packet discrimination number adding unit 102.

The encoded packets 108, generated by the encoded packet generating unit 101, are supplied to the encoded packet converting unit 103. The encoded packet converting unit 103 first decodes the input encoded packet and subsequently re-encodes the packet. In such re-encoding, high compression encoded packet 110, higher in the compression ratio than the encoded packets 108, is generated, by employing a technique of quantizing DCT coefficients, using larger quantization parameters, or by adaptively cutting higher order DCT coefficients.

The second error detection code/ packet discrimination number adding unit 104 adds error detection codes and packet discrimination numbers to the high compression encoded packet 110 to output the resulting high compression transmission packet 111, in order to detect bit errors and packet losses on the transmission line of the input compression encoded packets 110, on the encoded packet receiving apparatus 2. If the packet discrimination number of the high compression transmission packet 111 is associated with the original transmission packet 109, as confirmed by the encoded packet receiving apparatus 2 on the receiving side, any suitable discrimination number may be used. A large number which is not usual occurrence may be added as offset to the packet discrimination number appended to the original transmission packet 109, or "1" may be set at a preset bit in the binary representation of the packet discrimination number. Meanwhile, in an RTP packet, transmitted using the UDP (User Datagram Protocol)/ IP (Internet Protocol), the sequence number of the RTP header may be used as the packet discrimination number.

If, in the present embodiment, as in the first error detection code/packet discrimination number adding unit 102, it is possible to detect the bit errors and packet losses on the transmission line, there is no necessity for adding the error detection code/ packet discrimination number in the second error detection code/ packet discrimination number adding unit 104.

The delay adding unit 105 is supplied with the high compression transmission packet 111 to add the delay of a fixed period or the adaptively changed delay to output the delayed high compression transmission packet 112. In the present embodiment, the delay added to the high compression transmission packet 111 is preferably such time which takes the burst characteristics of bit errors and packet losses on the transmission line into account. On the other hand, the delay added by the delay adding unit 105 is set as the data transfer rate (bit rate) or the size of a buffer for storage of the received packets on the side of the encoded packet receiving apparatus 2 are taken into account. It is noted that the delay time which takes burst characteristics of bit errors and packet losses on the transmission line into account is determined, such as by actual measurement, and is set by the delay added by the delay adding unit 105, in such a manner that, on the side of the receiving apparatus, the transmission packet 109 and the high compression transmission packet 112, formed in association with the transmission packet 109 and added by the delay, will be contiguous to one another, without packet losses, or in such a manner that the probability of these packets missing simultaneously will be that low.

The transmission packet multiplexing unit 106 multiplexes the transmission packet 109, output from the first error detection code/ packet discrimination number adding unit 102, with the delayed high compression transmission packet 112, output from the delay adding unit 105, to generate the multiplexed transmission packet 113 to a transmit the packets on the transmission line, not shown, on the packet basis, using preset transmission means, not shown. The transmission means comprises a physical layer corresponding to the transmission line, a network layer positioned on the physical layer, and so forth. The transmission line may be wired or wireless, as desired.

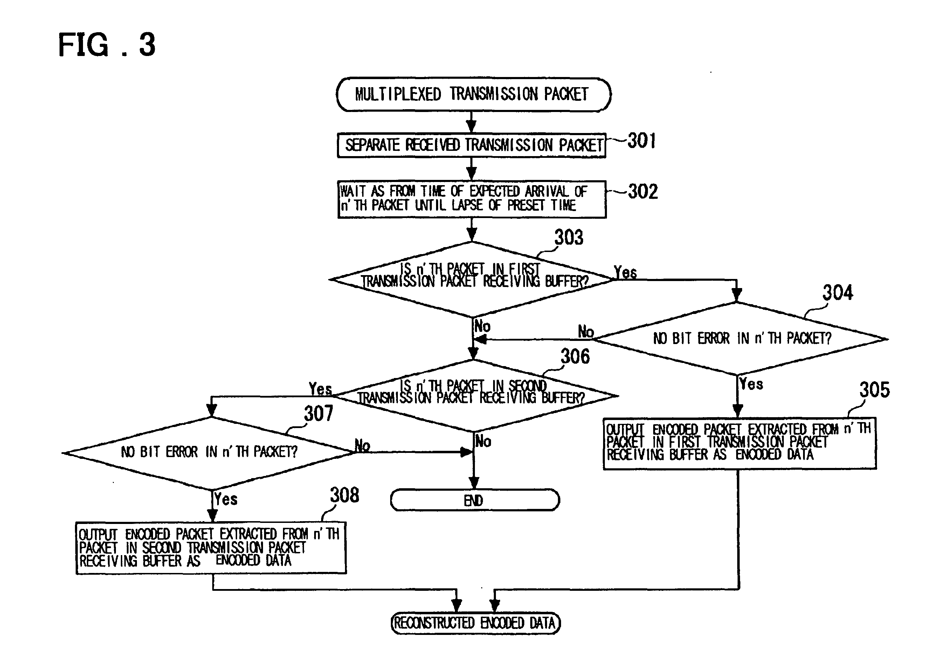

Fig.3 depicts a flowchart pertaining to the operation of the encoded packet receiving apparatus 2 of the present embodiment. Referring to Figs.2 and 3, the operation of the encoded packet receiving apparatus 2 of the present embodiment is hereinafter explained.

In a step 301 of Fig.3, the transmission packet demultiplexing unit 201 receives a multiplexed transmission packet 209, from a transmission line, and demultiplexes the packet into the transmission packet 210 and the delayed high compression transmission packet 211, by having reference to the packet discrimination number.

The transmission packet demultiplexing unit 201 outputs the transmission packet 210 to the first transmission packet storage unit 202, while outputting the delayed high compression transmission packet 211 to the second transmission packet storage unit 203.

In a step 302, the first transmission packet storage unit 202 stores the transmission packet 210, as input, in a first transmission packet receiving buffer, not shown, until a preset time elapses as from the expected arrival time of the n'th packet.

In a step 303, the first transmission packet error/ packet loss detection unit 205 verifies whether or not the n'th packet is present in the first transmission packet receiving buffer. If the n'th packet is present in the first transmission packet receiving buffer, the first transmission packet error/ packet loss detection unit 205 proceeds to a step 304. If otherwise, the first transmission packet error/ packet loss detection unit deems that the n'th packet is the packet loss and proceeds to a step 306.

In a step 304, the first transmission packet error/ packet loss detection unit 205 verifies whether or not there is any bit error in the n'th packet in the first transmission packet receiving buffer, using e.g. the error detection code added by the first error detection code/ packet discrimination number adding unit 102 of the encoded packet transmission apparatus 1. If there is no bit error in the n'th packet of the first transmission packet receiving buffer, the first transmission packet error/packet loss detection unit proceeds to a step 305. If there is any bit error in the n'th packet of the first transmission packet receiving buffer, the first transmission packet error/ packet loss detection unit proceeds to a step 306.

In the step 305, the first encoded packet 214, extracted in the first encoded packet extraction unit 204, is output as reconstructed encoded data 218 from the encoded data generating unit 208.

In a step 306, it is verified whether or not the n'th packet is in a second transmission packet receiving buffer. If the n'th packet is in the second transmission packet receiving buffer, processing transfers to a step 307. If the n'th packet is not in the second transmission packet receiving buffer, the second transmission packet error/ packet loss detection unit 207 deems that the n'th packet represents packet loss and does not output the reconstructed encoded data 218.

In a step 307, the second transmission packet error/ packet loss detection unit 207 verifies whether or not there is any bit error in the n'th packet in the second transmission packet receiving buffer, using e.g. the error detection code added by the second error detection code/ packet discrimination number adding unit 104 of the encoded packet transmission apparatus 1. If there is no bit error in the n'th packet of the second transmission packet receiving buffer, the second transmission packet error/ packet loss detection unit proceeds to a step 308. If there is any bit error in the n'th packet of the second transmission packet receiving buffer, the second transmission packet error/ packet loss detection unit 207 does not output the reconstructed encoded data 218.

In a step 308, the second encoded packet 216, extracted by the second encoded packet extraction unit 206, is output as reconstructed encoded data 218 from the encoded data generating unit 208.

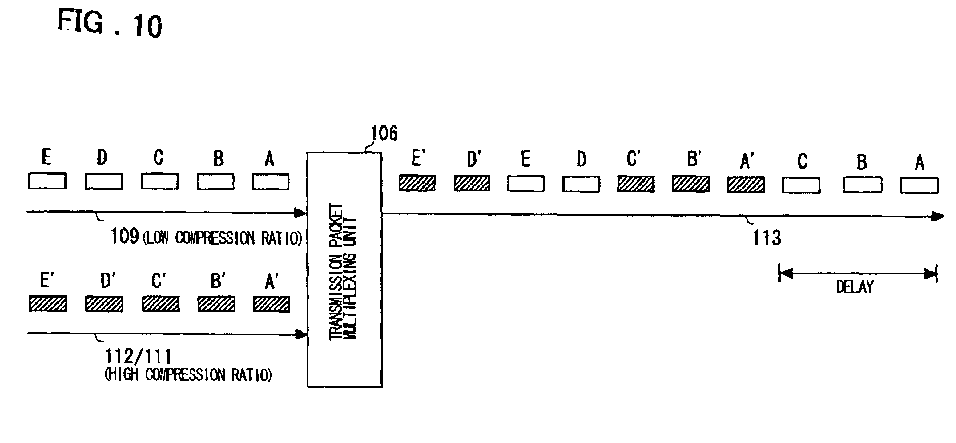

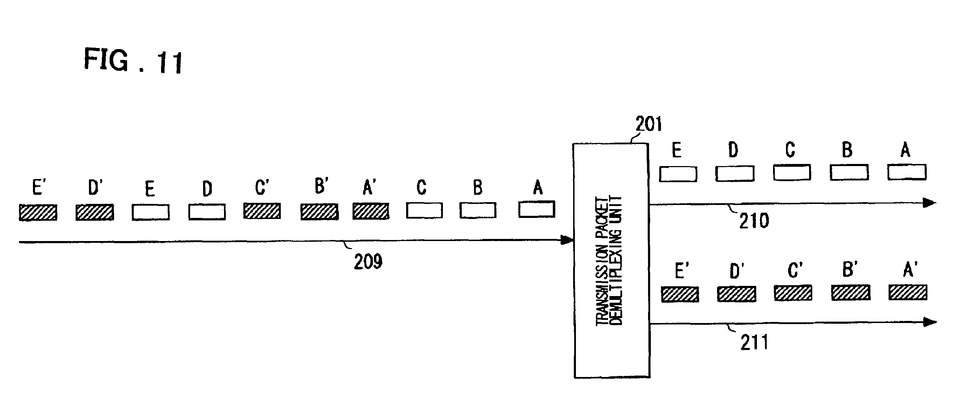

Fig.10 is a schematic view for illustrating an example of the operation of the transmission packet multiplexing unit 106 of the encoded packet transmitting apparatus 1 according to the first embodiment of the present invention. Fig.11 is a schematic view for illustrating an example of the operation of the transmission packet demultiplexing unit 201 of the encoded packet receiving apparatus 2.

Referring to Fig.10, packets A, B, C, D, E, ·····, as transmission packets 109, are sequentially input to the transmission packet multiplexing unit 106, while packets A', B', C', D', E', ·····, as delayed high compression transmission packets 112, output from the encoded packet converting unit 103 for re-encoding the packet data, second error detection code/ packet discrimination number adding unit 104 and the delay adding unit 105 (see Fig.1) are also sequentially input to the transmission packet multiplexing unit 106. Meanwhile, the delay added to the high compression transmission packets 112 is not shown in Fig.10.

The transmission packet multiplexing unit 106 multiplexes two packet streams, that is, the transmission packets 109 and the delayed high compression transmission packets 112, into one stream, to output a multiplexed transmission packet 113, shown schematically in Fig.10.

That is, the transmission packet multiplexing unit 106 outputs, as multiplexed transmission packets 113, a stream of the packets A, B, C, A', B', C', D, E, D', E', ·····. The delay from the packet A to the packet A' (the time indicated by an arrow in Fig.10), for example, is the delay added by the delay adding unit 105. Although the delay between the packets A and A', shown in Fig.10, is set so that two packets are interposed between these packets A and A', for the sake of simplicity, it is to be noted that the delay is not limited to this time interval. This delay is determined in view of the burst characteristics of the packet loss, bit rate or the buffer size of the receiving side apparatus, so that both the packets A and A' will not be missing simultaneously, or so that the probability of both the packets A and A' missing simultaneously will be extremely low. The delay added by the delay adding unit 105 may, of course, be changed dynamically based on the environment (for example, the characteristics on the side receiving apparatus). In the example shown in Fig.10, the delay between the packets D and D' in the multiplexed transmission packets 113 is one packet interposed therebetween and differs from the delay between the packets A and A', thus schematically indicating the possibility of dynamically changing the delay added by the delay adding unit.

Referring to Fig.11, the transmission packet demultiplexing unit 201 of the encoded packet receiving apparatus 2 is supplied with the packets A, B, C, A', B', C', D, E, D', E', ·····, as the multiplexed transmission packet 209, and demultiplexes the packet into the packets 210 (A, B, C, D, E, ·····) and the packets 211 (A', B', C', D', E' ·····), in association with the transmission packet 109 and with the delayed high compression transmission packet 112 of the encoded packet transmission apparatus 1, respectively. The packets 210 and 211 are stored in the first transmission packet storage unit 202 and in the second transmission packet storage unit 203, respectively.

Referring to Fig.1, a modification of the first embodiment of the present invention is described. In this modification, the delay adding unit 105 is omitted and delay is added to the packet in the transmission packet multiplexing unit 106 to output multiplexed packet. That is, in this modification of the first embodiment of the present invention, the transmission packet multiplexing unit 106 is supplied with the transmission packet 109, output from the first error detection code/ packet discrimination number adding unit 102 and with the transmission packet 111, output from the second error detection code/ packet discrimination number adding unit 104, and adds the delay to the transmission packet 111. That is, the packet 112 in Fig.10 is the high compression transmission packet 111, with the transmission packet multiplexing unit 106 adding the delay to the packet 111 and multiplexing the so delayed packet 111 to the input packet 112 to output the resulting multiplexed packet.

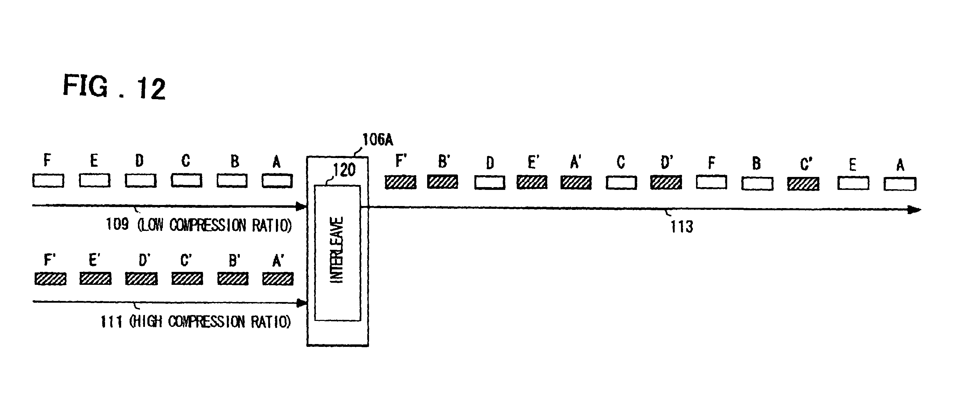

Another modification of the first embodiment of the present invention is now explained with reference to Figs.11 and 12. In the present modification, as in the first modification, described above, the delay adding unit 105 is omitted from the encoded packet transmission apparatus 1 of Fig.1 and there is provided a gap in the time interval of transmission of each of the transmission packets 109 and the high compression transmission packets 111, in the transmission packet multiplexing unit 106, by e.g. an interleaving method.

That is, referring to Fig.12, a transmission packet multiplexing unit 106A includes an interleaving circuit 120 for interleaving and multiplexing the transmission packet 109 and the high compression transmission packet 111.

If in the example shown in Fig.10, if A, B, C, D, E, ·····, as a stream of the transmission packets 109, and the packets A', B', C', D', E' ·····, as the stream of the high compression transmission packets 111, are multiplexed, the multiplexed transmission packets are A, B, C, A', B', C', D, E, D', E', ·····, such that, even after multiplexing by the transmission packet multiplexing unit 106, the packet sequence in the respective pre-multiplexing streams is kept.

In the present modification, a three-row four-column matrix table (conversion table):
A, B, C, D
E, F, A' , B'
C', D', E', F'
is provided and is scanned in the column direction first to transmit multiplexed packets having the packet sequence of A, E, C', B, F, D', C, A', E', D, B', F', ·····.

With the multiplexing processing, by this interleaving unit 120, the packets C' and D' of the high compression transmission packets 111 are transmitted earlier than the packets C and D of the original packets 109. On the other hand, the packet C of the transmission packets 109, as the origin of this duplicated packet, is equivalent to the packet C of the transmission packets 109, added by the delay. It is noted that the present duplicated packet C' is derived from the packet C of the of the transmission packets 109. Moreover, the packet F of the transmission packets 109 is transmitted earlier than the packet C. The packets A', E', B' and F' of the high compression transmission packets 111 correspond to the packets A, E, B, and F of the transmission packets 109, added by delay, respectively. That is, in the multiplexed output by the interleaving method, the packets are shuffled within and across the pre-multiplexing streams, such that the packet sequence in the pre-multiplexing streams is not kept. Even in this interleaving, the delay is introduced in the original transmission packets 109 and in the original high compression transmission packets 111 so that, for example, the packets A and A' are not missing simultaneously.

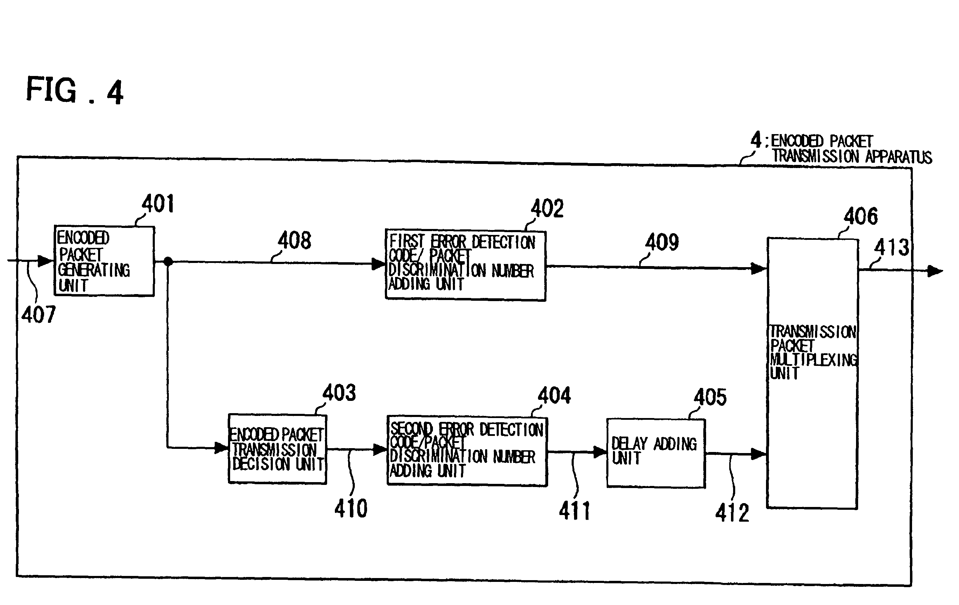

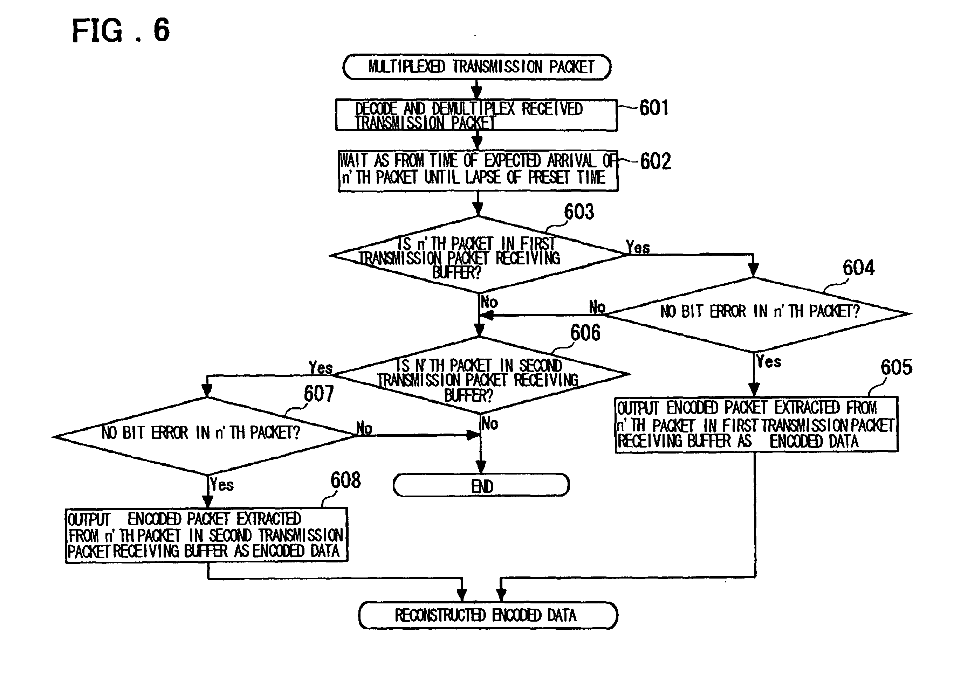

A second embodiment of the present invention is hereinafter explained. Fig.4 shows the configuration of an encoded packet transmitting apparatus 4 according to the second embodiment of the present invention. Fig.5 shows the configuration of an encoded packet receiving apparatus 5 according to a second embodiment of the present invention. Fig.6 is a flowchart showing the operation of the encoded packet receiving apparatus 5 according to the second embodiment of the present invention.

Referring to Fig.4, the processing by an encoded packet transmission decision unit 403 differs from that by the encoded packet converting unit 103 of the above embodiment, explained with reference to Fig.1 The configuration and the operation of the encoded packet generating unit 401, first error detection code/ packet discrimination number adding unit 402, second error detection code/ packet discrimination number adding unit 404, delay adding unit 405 and the transmission packet multiplexing unit 406 are similar to those of the encoded packet generating unit 101, first error detection code/ packet discrimination number adding unit 102, second error detection code/packet discrimination number adding unit 104, delay adding unit 105 and the transmission packet multiplexing unit 106 of Fig.1, respectively. Meanwhile, in Fig.4, 407 denotes moving picture data, 408 an encoded packet, 409 a transmission packet, 410 a selected-encoded packet, 411 a transmission packet, 412 a delayed high compression transmission packet and 413 denotes a multiplexed transmission packet. The difference between the present second embodiment and the previous embodiment is now explained.

Referring to Fig.4, the encoded packet transmission decision unit 403 is supplied with an encoded packet 408, output from the encoded packet generating unit 401, to output the selected-encoded packet 410 at a preset period related to the encoded packets 408 (at a rate of 1 per n encoded packets). Alternatively, the selected-encoded packet 410 is adaptively determined by referring to a characteristic parameter in the encoded packets 408. For example, the selected-encoded packet 410 to be transmitted is adaptively determined by referring to a parameter which will significantly affect the picture quality of the decoded picture due to bit error or packet loss, such as motion vector.

Referring to Fig.5, an encoded packet receiving apparatus 5 of the present embodiment includes a transmission packet decoding/demultiplexing unit 501, a first transmission packet storage unit 502, a second transmission packet storage unit 503, a first encoded packet extraction unit 504, a first transmission packet error/packet loss detection unit 505, a second encoded packet extraction unit 506, a second transmission packet error/packet loss detection unit 507, and a coded data generating unit 508. With the second embodiment of the encoded packet receiving apparatus 5, the processing by the transmission packet decoding/demultiplexing unit 501 differs from that by the transmission packet demultiplexing unit 201 of the previous embodiment, shown in Fig.2. The other respective units of this second embodiment are of the same configuration and function as the previous embodiment. If, on receipt of a multiplexed transmission packet from a transmission line, the transmission packet decoding/ demultiplexing unit 501 has found that the multiplexed transmission packet 509 has been received for the first time, it transmits the received packet as a first transmission packet 510 to a first transmission packet storage unit 502. If the multiplexed transmission packet has already been received, the transmission packet decoding/demultiplexing unit 501 outputs the received packet as a second transmission packet 511 to the second transmission packet storage unit 503.

Referring to Figs.5 and 6, the operation of the encoded packet receiving apparatus 5 in the second embodiment of the present invention is explained.

In a step 601 of Fig.6, the transmission packet decoding/demultiplexing unit 501 receives a multiplexed transmission packet 509 from the transmission line and, as it refers to the packet discrimination number of the packet, verifies whether or not the multiplexed transmission packet 509 has been received for the first time. If the multiplexed transmission packet 509 has been received for the first time, it is output to the first transmission packet storage unit 502 as a first transmission packet 510. If the packet of the first packet discrimination number received is the packet received a second time, it is output to the second transmission packet storage unit 503 as a second transmission packet 511.

The steps 602 to 608 of Fig.6 are the same as the steps 302 to 308 of Fig.3, and hence the explanations thereof are omitted.

An operational effect of the second embodiment of the present invention is that the band taken up in transmitting the second encoded packets may be prevented from being increased.

The reason is that, as the second encoded packet, not all of the first encoded packets are transmitted, but the first encoded packets are transmitted at a preset period (once every n packets), or that the second encoded packets transmitted are adaptively determined by having reference to the characteristic parameter of the first encoded packet.

Another operational effect of the second embodiment of the present invention is that deterioration of the picture quality of the decoded picture against bit errors or packet losses occurring on a transmission line for the compression encoded moving picture data may be reduced to a minimum.

The reason is that, in determining whether or not the second encoded packet is to be transmitted, such a parameter significantly affecting the picture quality of the decoded picture is referred to as a characteristic quantity.

In the present embodiment, if the encoded packet is of the same packet discrimination number as that of the previously received packet number, the encoded packet receiving apparatus 5 outputs the encoded packet as a delay high compression transmission packet 511 to the second transmission packet storage unit 503. The delay addition by the interleaving method, consisting in shuffling the sequence of packets multiplexed is not applied. The delay addition unit 405 adds the delay so that the packet sequence will be maintained in the respective transmission packets 109 and 112, as shown in Fig.10.

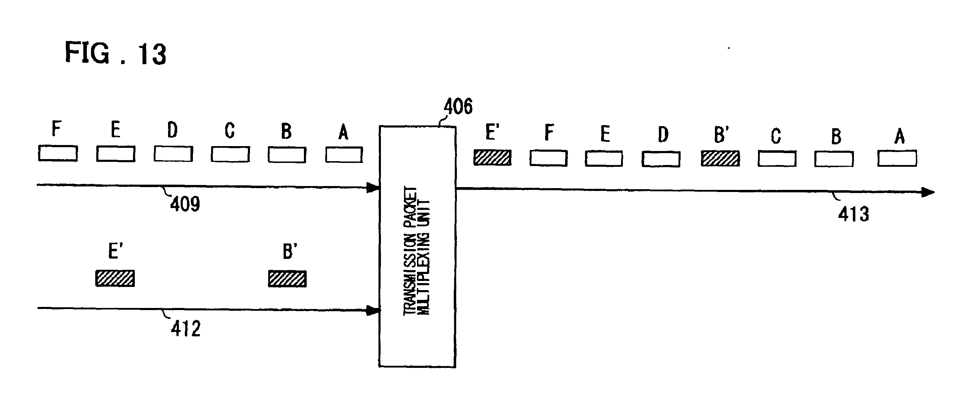

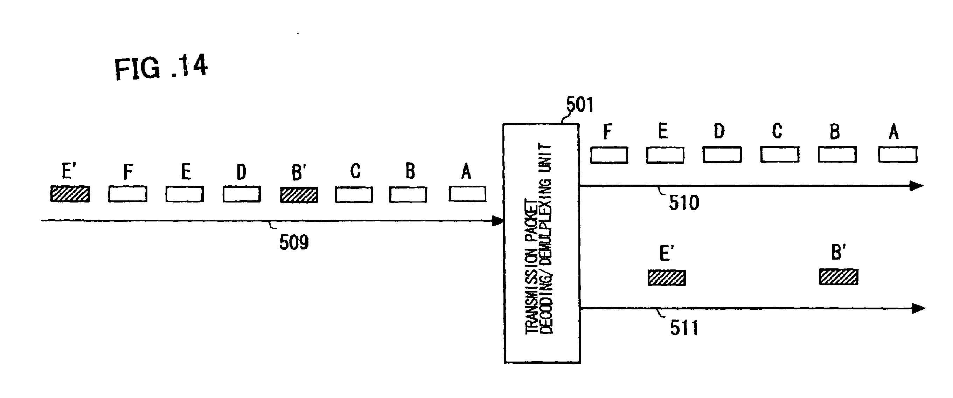

Fig.13 schematically shows the operation of a transmission packet multiplexing unit 413 of the encoded packet transmission apparatus 4 of the second embodiment of the present invention. Fig.14 schematically illustrates the operation of the transmission packet decoding/-demultiplexing unit 501 of the encoded packet receiving apparatus 5.

Referring to Fig.13, the packets A, B, C, D, E, ····· are input as transmission packets 409 to the multiplexing unit 406, and packets B', E', ·····are entered from the encoded packet transmission decision unit 403 via second error detection code/ packet discrimination number adding unit 404 and delay adding unit 405 to the multiplexing unit 406, as transmission packets 412. In Fig.13, the delay added to the transmission packets 112 is not shown. The transmission packet multiplexing unit 406 multiplexes the transmission packets 409 and the transmission packets 412 to output a stream of the packets A, B, C, B', D, E, F, E', ·····, as the multiplexed transmission packets 113. The time interval of B and B' represents the delay added by the delay adding unit 105.

Referring to Fig.14, the transmission packet decoding/demultiplexing unit 501 of the encoded packet receiving apparatus 5 is supplied with A, B, C, B', D, E, F, E', as multiplexed transmission packets 509 and, in association with the transmission packets 109 and 112 of the encoded packet transmission apparatus 1, is demultiplexed into A, B, C, D, E, F of the packets 510 and into B', E' of the packets 511. The packets 510 and 511 are stored in the first and second transmission packet storage units 502 and 503, respectively. That is, in the example shown in Fig.14, the packet discrimination number of the packet B' (E') is the same as that of the packet B (E), meaning that the packet has been received a second time. In the transmission packet decoding/ demultiplexing unit 501, the packets B', E' are separated into the packets 511.

A third embodiment of the present invention is hereinafter explained. Fig.7 shows the configuration of an encoded packet transmitting apparatus 7 according to a third embodiment of the present invention. Referring to Fig.7, in the encoded packet transmitting apparatus 7 of the third embodiment of the present invention, an encoded packet picture quality comparison/ transmission decision unit 703 differs from an encoded packet transmission decision unit 403, explained with reference to Fig.4. Meanwhile, in Fig.7, the configuration and function of the encoded packet generating unit 701, first error detection code/ packet discrimination number adding unit 702, second error detection code/packet discrimination number adding unit 704, delay adding unit 705 and the transmission packet multiplexing unit 706 are the same as those of the encoded packet generating unit 401, first error detection code/ packet discrimination number adding unit 402, second error detection code/packet discrimination number adding unit 404, delay adding unit 405 and the transmission packet multiplexing unit 406, respectively. In Fig.7, the reference numerals 707, 708, 709, 710, 711, 712 and 713 denote moving picture data, an encoded packet, a transmission packet, a selected-encoded packet, a transmission packet, a delay high compression transmission packet, and a multiplexed transmission packet, respectively. In the following, only the encoded packet picture quality comparison/transmission decision unit 703, which forms the point of difference of the present third embodiment from the above-described second embodiment, is explained.

In Fig.7, the encoded packet picture quality comparison/transmission decision unit 703 performs the decoding processing for a case where there is an error in an input encoded packet 708 and for a case where there is no error in then input encoded packet 708, and compares the picture quality for these two cases. Based on the result of comparison, the encoded packet picture quality comparison/ transmission decision unit 703 decides on the selected-encoded packet 710 for transmission. As the selected-encoded packet 710, such a packet which, if replaced by an encoded packet, corrupted with error, is deemed to be valid for suppressing the deterioration in the picture quality, is selectively output. No duplicated packet, which does not contribute to the suppression of the picture quality deterioration if used in substitution for the encoded packet, corrupted with error, is transmitted.

The operational effect of the third embodiment of the present invention is that picture quality deterioration of the decoded picture may be minimized despite bit errors or packet losses occurring on a transmission line of compression-encoded data of the moving pictures.

The reason is that, in determining whether or not the second encoded packet is to be transmitted, the second encoded packet is actually decoded to take the effect on the picture quality into account. A encoded packet receiving apparatus, adapted for receiving the multiplexed transmission packet 713, output from the encoded packet transmission apparatus 7 of the present embodiment, is the same in structure as the encoded packet receiving apparatus 5, explained with reference to Fig.5.

A fourth embodiment of the present invention is hereinafter explained. Fig.8 shows the configuration of an encoded packet transmitting apparatus 8 according to the fourth embodiment of the present invention. The encoded packet transmitting apparatus 8, according to the fourth embodiment of the present invention, includes the encoded packet converting unit 103 of Fig.1 upstream of the encoded packet transmission decision unit 403 of the second embodiment, shown in Fig.4. That is, referring to Fig.8, the encoded packet transmitting apparatus 8 includes an encoded packet generating unit 801, a first error detection code/ packet discrimination number appending unit 802, an encoded packet converting unit 803, an encoded packet transmission decision unit 804, a second error detection code/ packet discrimination number appending unit 805, a delay adding unit 806 and an encoded packet multiplexing unit 807. In Fig.8, the reference numerals 808, 809, 810, 811, 812, 813, 814 and 815 denote moving picture data, an encoded packet, a transmission packet, an encoded packet, a selected transmission packet, a transmission packet, a delay high compression transmission packet and a multiplexed transmission packet, respectively.

In the encoded packet transmitting apparatus 8 of Fig.8, the functions and the operations of the components other than the encoded packet transmission decision unit 804 are the same as those of the first embodiment shown in Fig.1. Meanwhile, the encoded packet receiving apparatus, receiving the multiplexed transmission packet 815, output from the encoded packet transmitting apparatus 8 of Fig.8, is of the same structure as the encoded packet receiving apparatus 2 of the first embodiment shown in Fig.1. The point of difference between the present embodiment and the previous embodiment is hereinafter explained.

In Fig.8, the encoded packet generating unit 801 once decodes the encoded packet 809 and subsequently re-encodes the packet to output a high compression encoded packet 811. The encoded packet transmission decision unit 804, supplied with the high compression encoded packet 811, transmits the high compression selected-encoded packet 812 at a preset period with respect to the input high compression encoded packet 811, that is, once every n encoded packets 811.

Alternatively, the encoded packet transmission decision unit 804 refers to the characteristic parameters in the high compression encoded packet 811 to decide on the high compression encoded packet 812 to be transmitted adaptively. The encoded packet transmission decision unit 804 refers to a parameter which will affect the picture quality of a decoded picture by bit error or packet loss, such as motion vector, to decide on the high compression encoded packet 812 to be transmitted adaptively.

The operational effect of the fourth embodiment of the present invention consists in the fact that increase in the band to be taken up in transmitting the second encoded packet as well as deterioration in the picture quality may be suppressed to the minimum.

The reason is that, in determining whether or not the second encoded packets (duplicated packets) are to be transmitted, to the first encoded packet 809, packet data are re-encoded so that the compression ratio will be higher than that of the first encoded packet 809, and is also that at a preset period, that is, once every n encoded packets, or by referring to a parameter as a characteristic quantity that will significantly affect the picture quality of the decoded picture, a packet which will contribute to suppression of deterioration of the picture quality of the decoded picture is selected and transmitted.

A fifth embodiment of the present invention is hereinafter explained. Fig.9 shows the configuration of an encoded packet transmitting apparatus 9 according to the fifth embodiment of the present invention. The encoded packet transmitting apparatus 9, according to the fifth embodiment of the present invention, includes the encoded packet converting unit 103 of Fig.1 upstream of the encoded packet picture quality comparison/ transmission decision unit 703 of the third embodiment, shown in Fig.7. That is, referring to Fig.9, the encoded packet transmitting apparatus 9 includes an encoded packet generating unit 901, a first error detection code/ packet discrimination number appending unit 902, an encoded packet converting unit 903, an encoded packet picture quality comparison/ transmission decision unit 904, a second error detection code/ packet discrimination number adding unit 905, a delay adding unit 906, an encoded packet picture quality comparison/ transmission decision unit 906, and a transmission packet multiplexing unit 907. In Fig.9, the reference numerals 908, 909, 910, 911, 912, 913, 914 and 915 denote moving picture data, an encoded packet, a transmission packet, an encoded packet, a selected transmission packet, a transmission packet, a delay high compression transmission packet and a multiplexed transmission packet, respectively.

In the encoded packet transmitting apparatus 9 of Fig.9, the functions and the operations of the respective units other than the encoded packet picture quality comparison/ transmission decision unit 904 are the same as those of the first embodiment shown in Fig.1. Meanwhile, the encoded packet receiving apparatus used is of the same structure as the encoded packet receiving apparatus 2 of the first embodiment shown in Fig.2. The point of difference between the present embodiment and the previous embodiment is hereinafter explained.

In Fig.9, the encoded packet picture quality comparison/transmission decision unit 904 performs the decoding processing for a case where there is an error in the high compression encoded packet 911, re-encoded in the encoded packet converting unit 803, and for a case where there is no error in the encoded packet 911, and compares the picture quality for these two cases. Based on the result of comparison, the encoded packet picture quality comparison/ transmission decision unit 904 decides on the high compression selected-encoded packet 912 to be transmitted.

The operational effect of the fourth embodiment of the present invention consists in the fact that increase in the band to be taken up in transmitting the second encoded packet as well as deterioration in the picture quality may be minimized.

The reason is that, in determining whether or not the second encoded packets (duplicated packets) are to be transmitted, for the first encoded packet 809, the second encoded packet are re-encoded so that the compression ratio will be higher than that of the first encoded packet, and that the encoded packet picture quality comparison/ transmission decision unit 904 actually performs the decoding processing to refer to the effect on the picture quality.

It should be noted that the source of the compression-encoded moving picture data, such as 107 of Fig.1, may be any suitable source, such as a server device connected over a network to the encoded packet transmission apparatus, such as 1 of Fig.1. The encoded packet receiving apparatus, such as 2 of Fig.2, may be connected to a decoder, not shown, so that the coded data may be decoded by the decoder. Although the present invention has so far been explained with reference to preferred embodiments, the present invention is not limited to these embodiments and may comprise a variety of changes or corrections which will become evident to those skilled in the art within the scope of the invention as defined in the claims.

### Industrial Utilizability

As explained in detail hereinabove, the present invention gives rise to the following effects:

The first effect of the present invention is that the decoded picture may be prevented from becoming deteriorated in picture quality even despite bit errors and packet losses on a transmission line of data obtained by compression-encoding of moving picture.

The reason is that, in the present invention, the compression-encoded moving picture data are duplicated and transmitted at time intervals which are either constant or are changed adaptively in order to take account of burst characteristics of bit errors or packet losses occurring on a transmission line. By this configuration, the probability of bit errors occurring in both the moving picture packets transmitted and the duplicated packets or the probability of both packets being lost may be lowered.

The second effect of the present invention is that, in transmitting the two sorts of the compression-encoded moving picture packets, it is possible to suppress the bandwidth taken up by the packet being transmitted.

The reason is that, in generating the second encoded packet from the input first encoded packet, according to the present invention, the first encoded packet is first decoded and subsequently re-encoded so that the compression ratio will be higher than that of the first encoded packet.

The present invention further gives rise to such a effect that, in determining whether a duplicated packet of the original packet (second encoded packet) is to be transmitted, the packet is actually decoded to refer to the effect on the picture quality, thus minimizing the deterioration of the picture quality of the decoded picture despite the occurrence of bit errors or packet losses on the transmission line for the compression-encoded moving picture data.

In addition, according to the present invention, the duplicated packets, generated on re-encoding the original packets, are decimated for transmission, thus suppressing the bandwidth taken up in transmitting the two sorts of the moving picture packets.

## Claims

1. An encoded data transmission apparatus comprising:
means for receiving compression-encoded data and for outputting data converted therefrom, said means outputting data obtained on decoding said compression-encoded data, re-encoding the decoded data and on selecting part or all of the re-encoded data, or outputting data selected from said compression-encoded data, as duplicated data; and
means for controlling delay so that the compression-encoded data and said duplicated data will be transmitted with temporal spacing of a preset time interval in-between, multiplexing the compression-encoded data and said duplicated data and outputting the resultant multiplexed data.

2. An encoded data receiving apparatus comprising:
means for receiving multiplexed data sent from the encoded data transmission apparatus as defined in claim 1 and for demultiplexing said compression-encoded data and said duplicated data from said received multiplexed data; and
means for reconstructing encoded data, using the duplicated data received, in substitution for said compression-encoded data, and for outputting the so reconstructed encoded data.

3. A encoded packet transmitting apparatus comprising:
a converting unit for receiving a packet compression-encoded at a preset compression ratio, decoding data of the packet supplied once, forming a packet compression-encoded from the data of the decoded packet at a compression ratio different from said preset compression ratio, and for outputting the so formed packet;
a delay controlling unit for controlling the delay added to said packet compression-encoded at said preset compression ratio (termed a 'a first class packet') and/or to said packet formed on re-encoding by said converting unit (termed 'a second class packet') so that said first class packet and the second class packet are transmitted with the temporal spacing corresponding to a preset time interval, in-between; and
a multiplexing unit for outputting a multiplexed transmission packet, obtained on multiplexing said first class packet and the second class packet.

4. A encoded packet receiving apparatus comprising:
a demultiplexing unit for receiving a multiplexed transmission packet, including a first class packet and a second class packet, formed on the basis of said first class packet, transmitted multiplexed so that temporal spacing is maintained in-between, and for demultiplexing said multiplexed transmission packet into said first class packet and said second class packet;
a detecting unit for detecting if there is packet loss or transmission error in the first class packet or in the second class packet obtained on demultiplexing; and
a generating unit for outputting a predetermined class packet, out of said first class packet and said second class packet, which has been received as normally, as reconstructed data; said generating unit outputting, in case said predetermined class packet has not been received as normally and the other class packet has been received as normally, said normally received packet as reconstructed data.

5. The encoded packet receiving apparatus as defined in claim 4, wherein said second class packet is re-encoded from said first class packet and has been encoded at a compression ratio different from the compression ratio different from the compression ratio of said first class packet.

6. The encoded packet receiving apparatus as defined in claim 3, further comprising
a transmission decision unit, arranged in substitution for said converting unit or downstream of said converting unit, for deciding on a packet for transmission at an interval of a period of input packets or based on a preset parameter of packet data.

7. The encoded packet receiving apparatus as defined in claim 3 further comprising
a transmission decision unit, arranged in substitution for said converting unit or downstream of said converting unit, said transmission decision unit performing decoding processing for a case where there is an error in said packet and for a case where there is no error in said packet, comparing the quality of the decoded results and deciding on a packet for transmission based on the results of comparison.

8. A encoded packet receiving apparatus comprising:
a decoding/ demultiplexing unit for receiving multiplexed transmission packets including first class packets transmitted multiplexed at a time interval from one another and second class packets formulated based on said first class packets, decoding the number of times said multiplexed transmission packets have been received and for demultiplexing said multiplexed transmission packets into said first class packets and said second class packets, based on said number of times of receipt;
a detection unit for detecting whether or not there is packet loss or transmission error in the first or second class packets obtained on demultiplexing;
a generating unit for outputting a predetermined class packet, out of said first class packet and said second class packet, which has been received as normally, as reconstructed data; said generating unit outputting, in case said predetermined class packet has not been received as normally and the other class packet has been received as normally, said normally received packet as reconstructed data.

9. The encoded packet transmitting apparatus as defined in any one of claims 3, 6 and 7, wherein said packet is moving picture packet obtained on compressed-encoding moving picture data and packetizing the encoded data.

10. The encoded packet transmitting apparatus as defined in any one of claims 4, 5 and 8, wherein said packet is moving picture packet obtained on compressed-encoding moving picture data and packetizing the encoded data.

11. A encoded packet transmitting apparatus for receiving compression-encoded moving picture data or moving picture packets to transmit moving picture packets, comprising:
an encoded packet converting unit receiving as an input a compression-encoded moving picture packet to output moving picture packet obtained on encoding said moving picture packet with a compression ratio different from the compression ratio of said input moving picture packet;
a delay adding unit for performing control for adding preset delay to said moving picture packet output from said encoded packet converting unit to transmit said moving picture packet output from said encoded packet converting unit with temporal spacing; and
a transmission packet multiplexing unit for multiplexing said moving picture packets and said moving picture packets.

12. A encoded packet receiving apparatus for receiving compression-encoded moving picture packets to transmit encoded data, comprising:
a transmission packet demultiplexing unit for receiving a multiplexed transmission packet and for separating multiplexed plural moving picture packets having respective different compression ratio values; and
an encoded data generating unit for selecting encoded data, based on the compression ratio, from the data of the encoded packets received, reconstructing the encoded data and outputting the reconstructed encoded data.

13. An encoded packet transmitting system comprising the encoded packet transmitting apparatus as defined in claim 11 and the encoded packet receiving apparatus as defined in claim 12.

14. A encoded packet transmitting apparatus receiving compression-encoded moving picture data or moving picture packets to transmit moving picture packets, comprising:
an encoded packet transmission decision unit for selecting a moving picture packet, transmitted as a duplicated packet, from moving picture packets received, at a preset period;
a delay adding unit for exercising control for providing a temporal spacing in transmitting said selected moving picture packet; and
a transmission packet multiplexing unit for multiplexing the moving picture packet received and said moving picture packet selected.

15. A encoded packet receiving apparatus for receiving compression-encoded moving picture packets to transmit encoded data, comprising
a transmission packet decoding/ demultiplexing unit for decoding the number of times of receipt of the same sort packets, out of a plurality of multiplexed moving picture packets received, for demultiplexing the multiplexed moving picture packets into the plural moving picture packets; and
an encoded data generating unit for selecting the encoded data received normally and for reconstructing encoded data to output the reconstructed encoded data.

16. A encoded packet transmitting system comprising an encoded packet transmitting apparatus as defined in claim 14, and an encoded packet receiving apparatus as defined in claim 15.

17. A encoded packet transmitting apparatus for receiving compression-encoded moving picture data or moving picture packets to transmit moving picture packets, comprising:
an encoded packet transmission decision unit for selecting a moving picture packet to be duplicated, using a preset characteristic parameter contained in a moving picture packet received;
a delay adding unit for exercising control for providing a temporal spacing in transmitting the selected moving picture packet; and
a transmission packet multiplexing unit for multiplexing the moving picture packet received and the moving picture packet selected and transmitting the so multiplexed packet.

18. A encoded packet transmitting apparatus for receiving compression-encoded moving picture data or moving picture packets to transmit moving picture packets, comprising:
an encoded packet picture quality comparing/ transmission decision unit for comparing the picture quality for a case where there is an error in a received moving picture packet and for a case where there is no error in a received moving picture packet, and for selecting the moving picture packets for duplication, using the results of picture quality comparison;
a delay adding unit for exercising control for providing a temporal spacing in transmitting the selected moving picture packet; and
a transmission packet multiplexing unit for multiplexing the moving picture packet and said selected moving picture packet and for transmitting the so multiplexed packet.

19. A encoded packet transmitting apparatus for receiving compression-encoded moving picture data or moving picture packets to transmit moving picture packets, comprising:
an encoded packet converting unit for outputting plural moving picture packets obtained on varying the compression ratio of the input moving picture packets;
an encoded packet transmission decision unit for selecting, at a preset period, the moving picture packet output as a duplicated packet, out of a plurality of moving picture packets, the compression ratio of which has been changed;
a delay adding unit for exercising control for providing a temporal spacing in transmitting the selected moving picture packet; and
a transmission packet multiplexing unit for multiplexing the moving picture packet received and the moving picture packet selected.

20. A encoded packet transmitting apparatus for receiving compression-encoded moving picture data or moving picture packets to transmit moving picture packets, comprising:
an encoded packet converting unit for outputting a plurality of moving picture packets corresponding to a plurality of moving picture packets, as received, the compression ratio value thereof being changed;
an encoded packet transmission decision unit for selecting a moving picture packet to be duplicated, using a characteristic parameter contained in a plurality of moving picture packets, each having said compression ratio changed;
a delay controlling unit for exercising control for providing a temporal spacing in transmitting the selected moving picture packets; and
a transmission packet multiplexing unit for multiplexing the moving picture packet received and the moving picture packet selected.

21. A encoded packet transmitting apparatus for receiving compression-encoded moving picture data or moving picture packets to transmit moving picture packets, comprising:
an encoded packet converting unit for outputting a plurality of moving picture packets corresponding to a plurality of moving picture packets, as received, the compression ratios thereof being changed;
an encoded packet picture quality comparing/ transmission decision unit for comparing the picture quality for a case where there is an error in a received moving picture packet and for a case where there is no error in a received moving picture packet and for selecting the moving picture packet for duplication, using the results of picture quality comparison;
a delay adding unit for exercising control for providing a temporal spacing in transmitting the selected moving picture packets; and
a transmission packet multiplexing unit for multiplexing the moving picture packet and said selected moving picture packet.

22. A encoded packet transmitting system comprising an encoded packet transmitting apparatus as defined in any one of claims 17 to 21 and an encoded packet receiving apparatus as defined in any one of claims 12 to 15.

23. A encoded packet transmitting method comprising:
a step of outputting all or a selected portion of data obtained on decoding compression-encoded data and re-encoding the decoded data, by a converting means for receiving said compression-encoded data, converting the data to outputting the converted data, or data selected from said compression-encoded data, as duplicated data; and
a step of controlling the delay of said compression-encoded data and said duplicated data so that the compression-encoded data and the duplicated data are transmitted with a preset temporal spacing in-between, multiplexing said compression-encoded data and said duplicated data and outputting the multiplexed data.

24. A coded data receiving method comprising:
a step of receiving multiplexed data, sent out in accordance with the encoded data transmitting method as defined in claim 23, and demultiplexing said multiplexed data into said compression-encoded data and said duplicated data; and
a step of reconstructing received encoded data using the received duplicated data, in substitution for said compression-encoded data, and outputting the reconstructed encoded data.

25. A method for transmitting encoded packets comprising:
a step of receiving a packet compression-encoded at a preset compression ratio, decoding once data of the input packet, forming a packet of said decoded data of the input packet at a compression ratio different from said preset compression ratio, and outputting the so formed packet;
a step of controlling the delay added to said packet compression-encoded at said preset compression ratio (termed a 'a first class packet') and/or to said packet formed on re-encoding (termed 'a second class packet') so that said first class packet and the second class packet are transmitted with temporal spacing, corresponding to a preset time interval, in-between; and
a step of outputting a multiplexed transmission packet obtained on multiplexing said first class packet and said second class packet.

26. A method for receiving encoded packets comprising:
a step of receiving a multiplexed transmission packet, including a first class packet and a second class packet formed on the basis of said first class packet, transmitted multiplexed so that temporal spacing is maintained in-between, and for demultiplexing said multiplexed transmission packet into said first class packet and said second class packet;
a step of detecting if there is packet loss or transmission error in the first class packet or in the second class packet, obtained on demultiplexing; and
a step of outputting a predetermined class packet, out of said first class packet and said second class packet, which has been received as normally, as reconstructed data, and outputting, in case said predetermined class packet has not been received normally and the other class packet has been received normally, said normally received packet as reconstructed data.

27. The method for transmitting encoded packets as defined in claim 25, comprising, in place of said first step or between said first and second steps, a step of deciding on the packet to be transmitted at a preset period as to input packets or based on a preset parameter of packet data.

28. The method for transmitting encoded packets as defined in claim 25, comprising, in place of said first step or between said first and second steps, a step of performing decoding processing for a case where there is an error in said packet and for a case where there is no error in said packet, comparing the quality of the decoded results and deciding on a packet for transmission based on the results of comparison.

29. The method for transmitting encoded packets as defined in claim 26, comprising, in place of said first step or between said first and second steps, a step of receiving multiplexed transmission packets including a first class packet multiplexed and transmitted at a temporal spacing in-between and a second class packet formulated based on said first class packet, decoding the number of times said multiplexed transmission packets have been received and demultiplexing said multiplexed transmission packets into said first class packets and said second class packets, based on said number of times of receipt.

30. The method for transmitting encoded packets as defined in any one of claims 25, 27 and 28, wherein said packet is a moving picture packet obtained on compressed-encoding moving picture data and packetizing the encoded data.

31. The method for transmitting encoded packets as defined in claim 26 or 29, wherein said packet is a moving picture packet obtained on compressed-encoding moving picture data and packetizing the moving picture packet.

32. A program for causing a computer, forming an apparatus for transmitting encoded data, to execute
a processing of receiving compression-encoded data and outputting data converted therefrom, said processing outputting data obtained on decoding said compression-encoded data, re-encoding the resultant data and on selecting part or all of the re-encoded data, or outputting data selected from said compression-encoded data, as duplicated data; and
a processing of controlling the delay and multiplexing so that the compression-encoded data and said duplicated data will be transmitted with temporal spacing of a preset time interval in-between.

33. A program for causing a computer, forming an apparatus for receiving multiplexed data sent out from an apparatus transmitting said encoded data as defined in claim 32, over a transmission line, to execute
a processing of demultiplexing the input multiplexed data into said compression-encoded data and said duplicated data; and
a processing of reconstructing encoded data using the duplicated data received, in substitution for said compression-encoded data.

34. A program for causing a computer forming an encoded packet transmitting apparatus to execute
a first processing of receiving a packet compression-encoded at a preset compression ratio, decoding data of the packet supplied once, forming a packet compression-encoded from the data of the decoded packet at a compression ratio different from said preset compression ratio, and for outputting the so formed packet;
a second processing of controlling the delay added to a packet compression-encoded at said preset compression ratio (termed a 'a first class packet') and/or to a packet formed on re-encoding by said converting unit (termed 'a second class packet') so that said first class packet and the second class packet are transmitted with temporal spacing, corresponding to a preset time intreval, in-between; and
a third processing of outputting a multiplexed transmission packet, obtained on multiplexing said first class packet and the second class packet.

35. A program for causing a computer, forming an encoded packet receiving apparatus, to execute
a first processing of receiving a multiplexed transmission packet, including a first class packet and a second class packet formed on the basis of said first class packet, said first class packets multiplexed and transmitted so that temporal spacing is maintained therebetween, and for demultiplexing said multiplexed transmission packet into said first class packet and said second class packet;
a second processing of detecting if there is packet loss or transmission error in the first class packet or in the second class packet obtained on demultiplexing; and
a third processing of outputting a predetermined class packet, out of said first class packet and said second class packet, which has been received normally, as reconstructed data; said generating unit outputting, in case said predetermined class packet has not been received as normally and the other class packet has been received normally, said normally received packet as reconstructed data.

36. The program as defined in claim 34, wherein
the compression ratio of said first packet differs from that of said second packet.

37. The program as defined in claim 34, for causing the computer to execute, in place of said first processing or between said first processing and second processing, a processing of deciding on the packet for transmission at an interval of a period of input packets or based on a preset parameter of packet data.

38. The program as defined in claim 34, for causing the computer to execute, in place of said first processing or between said first processing and said second processing,
a processing of performing decoding processing for a case where there is an error in said packet and for a case where there is no error in said packet, comparing the quality of the decoded results and deciding on a packet for transmission based on the results of comparison.

39. The program as defined in claim 35, for causing the computer to execute, in place of said first processing,
a processing of receiving multiplexed transmission packets including a first packet and a second packet added by said delay, decoding the number of times the same packet has been received and for demultiplexing said multiplexed transmission packets into said first and second packets, based on said number of times of receipt.

40. The program as defined in any one of claims 34 to 39, wherein said packet is a moving picture packet obtained on compressed-encoding moving picture data and packetizing the encoded data.

41. An apparatus for transmitting encoded data comprising:
a duplicating unit for producing duplicated data of said encoded data output to a transmission line; and
a controlling unit for performing control so as to transmit said encoded data and said duplicated data with being temporally spaced at a preset interval in-between.

42. The apparatus for transmitting encoded data as defined in claim 41, further comprising controlling means for performing control so as to transmit said encoded data and the duplicated data with temporal spacing corresponding to a preset period or to an adaptively changing time interval in order to take account of the burst characteristics of bit errors or packet losses on said transmission line.

43. The apparatus for transmitting encoded data as defined in claim 41, further comprising means for deciding data to be duplicated, out of said encoded data, by having reference to a parameter contained in the encoded packet data to be transmitted and contributing to the effect on the quality of the decoded data.

44. The apparatus for transmitting encoded data as defined in claim 41, further comprising means for decoding encoded data to be transmitted and for comparing the quality of the decoded data in case there is error contained therein and that in case there is no error contained therein; and
means for deciding data to be duplicated by having reference to the comparison result.

45. The apparatus for transmitting encoded data as defined in claim 41, further comprising means for decoding the encoded data once and subsequently re-encoding the decoded data with a compression ratio different from the original compression ratio.

46. The apparatus for transmitting encoded data as defined in any one of claims 41 to 45, wherein said encoded data is compression-encoded moving picture data.

47. An apparatus for receiving data comprising
a demultiplexing unit for receiving data transmitted over a transmission line and separating received data into encoded data and duplicated data of said encoded data; and
a re-constructing unit for reconstructing data based on said encoded data and said duplicated data, resulting from the separation, and outputting reconstructed data.

48. The apparatus for receiving data as defined in claim 47, wherein said apparatus receives data transmitted and separated into said encoded data and said duplicated data from the encoded data transmitting apparatus as defined in any one of claims 41 to 46.

49. A method for transmitting encoded data on a transmission line, comprising:
a step of producing duplicated data of said encoded data output on said transmission line; and
a step of performing control so as to transmit said encoded data and said duplicated data with temporal spacing of a preset time interval in-between.

50. The method for transmitting encoded data as defined in claim 49, further comprising a step for performing control so as to transmit said encoded data and the duplicated data with temporal spacing corresponding to a preset period or to an adaptively changing time duration in order to take account of the burst characteristics of bit errors or packet losses on said transmission line.

51. The method for transmitting encoded data as defined in claim 49, further comprising a step of deciding data of said encoded data to be duplicated by having reference to parameters which are contained in encoded packets to be transmitted and which contribute to the effect on the quality of the decoded data.

52. The method for transmitting encoded data as defined in claim 49, further comprising a step of decoding encoded data to be transmitted and comparing the quality of encoded data for a case where there is an error in said packet and for a case where there is no error in said packet; and
a step of deciding the results of comparison and deciding on a packet for duplication based on the comparison result.

53. The method for transmitting encoded data as defined in claim 49 further comprising, in duplicating and transmitting encoded data,
a step of decoding encoded data once and subsequently re-encoding the decoded data at a compression ratio different from the compression ratio of the original compression ratio.

54. The method for transmitting encoded data as defined in any one of claims 49 to 53, wherein said encoded data is compression-encoded moving picture data.

55. A method for receiving encoded data comprising:
a step of receiving data transmitted on a transmission line and separating the received data into encoded data and duplicated data of said encoded data, and
a step of reconstructing data based on said encoded data and said duplicated data separated to output reconstructed data.

56. The encoded data receiving method as defined in claim 55, wherein data transmitted and separated into said encoded data and into said duplicated data by said encoded data transmitting method as defined in any one of claims 49 to 54 is received.
